# EUROPÄISCHE PATENTSCHRIFT

(11) **EP 3 110 635 B1**
(45) Veröffentlichungstag und Bekanntmachung des Hinweises auf die Patenterteilung: **29.08.2018**
(21) Anmeldenummer: 15700205.6
(22) Anmeldetag: 09.01.2015
(51) Int. Cl.: B60C 13/00, B60C 13/02

(54) **FAHRZEUGREIFEN**
VEHICLE TYRE
PNEUMATIQUE DE VEHICULE

(30) Priorität: 26.02.2014 DE 102014203426
(43) Veröffentlichungstag der Anmeldung: 04.01.2017
(73) Patentinhaber: Continental Reifen Deutschland GmbH, 30165 Hannover (DE)
(72) Erfinder: WILDHAGE, Michael, 31515 Wunstorf (DE); KRIEGER, Ralf, 30559 Hannover (DE)
(74) Vertreter: Widjaja, Wira
(86) Internationale Anmeldenummer: PCT/EP2015/050285
(87) Internationale Veröffentlichungsnummer: WO 2015/128105

(56) Entgegenhaltungen:
- WO-A1-2009/029088
- GB-A- 178 496
- GB-A- 1 471 883
- US-A- 4 155 393

## Beschreibung

Die Erfindung betrifft einen Fahrzeugreifen für den Einsatz auf Baustellen oder für den Bergbau mit einem Laufstreifen, einer Reifenkarkasse, Reifenwülsten, Reifenschultern und Seitenwänden, wobei die Seitenwände sich von den Reifenwülsten bis in die Reifenschultern hin erstrecken, wobei die Seitenwände unterschiedliche Teilbereiche aufweisen und eine schützende Materialschicht für die Reifenkarkasse bilden, wobei ein Teilbereich der Seitenwand eine ausgeprägte strukturierte Oberfläche mit regelmäßig angeordneten auf der Seitenwand aufgesetzten Seitenwand-Elementen und einen Positivanteil an Gummimaterial von 20 % bis 70 % aufweist.

Ein Fahrzeugreifen der eingangs genannten Art ist beispielsweise aus der WO 2009/029088 A1 bekannt. Auf jeder Seitenwand sind zwei Reihen blockartiger Seitenwand-Elemente aufgesetzt, wobei die Seitenwand-Elemente der einzelnen Reihen in Umfangsrichtung aufeinanderfolgen und die Seitenwand-Elemente aus den unterschiedlichen Reihen in radialer Richtung gegeneinander versetzt sind.

Die US 5 155 393 A offenbart einen Fahrzeugreifen mit Seitenwänden, in welchen relativ seichte und schmale Rillen ausgebildet sind, welche beispielsweise ein Breite von 4,7 mm und eine Tiefe von höchsten 12,7 mm aufweisen. Die Rillen und die zwischen ihnen liegenden Seitenwandbereiche sollen ein Fortschreiten von bereits in den Seitenwänden entstandenen Rissen verhindern.

Aus der GB 178 496 A ist ein Luftreifen bekannt, dessen Seitenwände mit kuppelförmigen Seitenwand-Elementen versehen sind, welche über die Seitenwandkontur hinausragen.

Die GB 1 471 883 A offenbart einen weiteren Fahrzeugreifen mit einer speziellen Seitenwandgestaltung.

Ein Problem bei Fahrzeugreifen für den Einsatz auf Baustellen oder für den Bergbau besteht darin, dass die Seitenwand durch auftreffende Gegenstände beschädigt werden kann.
Insbesondere bei Fahrzeugreifen, die für den Untertagebergbau eingesetzt werden, ist es wichtig, dass die Seitenwände eine hohe Schnittresistenz in Hinblick auf scharfkantige Felsen und Steine besitzen.

Der Erfindung liegt die Aufgabe zu Grunde, bei einem Fahrzeugreifen für Baustellen die Seitenwände so zu gestalten, dass die Seitenwand optimal vor Beschädigungen geschützt wird.
Außerdem soll die Seitenwand gleichzeitig kein wesentlich höheres Gewicht haben im Vergleich zu einem ähnlichen Fahrzeugreifen.

Gelöst wird die Aufgabe gemäß Anspruch 1.

Ein Vorteil des erfindungsgemäßen Fahrzeugreifens besteht darin, dass durch die konstruktive Gestaltung der Seitenwand die Seitenwand insgesamt optimal vor mechanischen Beschädigungen geschützt wird.
Der Fahrzeugreifen erhält durch diese Ausgestaltung eine verbesserte Seitenwand, ohne dass dabei mehr Gummimaterial in der Seitenwand angeordnet wird.
Die ausgeprägte strukturierte Oberfläche in der Seitenwand, mit den regelmäßig angeordneten Seitenwandelementen und dazwischen liegenden ausgeprägten Aussparungen, erhöht die elastischen Eigenschaften der Außenseite der Seitenwand. Dadurch wird die Schnittresistenz der Seitenwand gegenüber scharfkantigen Objekten wesentlich erhöht. Die scharfkantigen Objekte, wie beispielsweise spitze Steine oder scharfkantige Felsen, führen beim Kontakt mit der strukturierten Oberfläche der Seitenwand nicht mehr zu einer direkten Beschädigung der Seitenwand. Die strukturierte Oberfläche der Seitenwand kann den scharfkantigen Objekten bei einem direkten Kontakt besser ausweichen, wodurch eine hohe Schnittresistenz der Seitenwand gewährleistet wird.
Ein weiterer Vorteil besteht darin, dass durch die Aussparungen in der strukturierten Oberfläche der Seitenwand das Materialgewicht der Seitenwand, gegenüber herkömmlichen Fahrzeugreifen für Baustellen, nicht wesentlich erhöht wird. Außerdem lässt sich die strukturierte Oberfläche in den Seitenwänden relativ einfach über eine entsprechende Anpassung der Seitenwandschalen der Vulkanisationsform herstellen.

Dadurch, dass der Teilbereich der Seitenwand mit der strukturierten Oberfläche im Querschnitt linsenförmig ausgebildet ist, lässt sich die strukturierte Oberfläche optimal an die Außenkontur der Seitenwand anpassen. Außerdem lässt sich die linsenförmige Querschnitts-Form der strukturierten Oberfläche relativ einfach herstellen, in dem die Seitenwandschalen der Vulkanisationsform entsprechend profiliert werden. Die erfindungsgemäß ausgelegte äußere Konturlinie der strukturierten Oberfläche verbessert die Schnittresistenz gegenüber scharfkantigen Objekten.

Es ist vorgesehen, dass die Seitenwandelemente der strukturierten Oberfläche in Form von herausragenden Noppen ausgebildet sind.
Mit den Noppen lässt sich eine hohe Schnittresistenz erzielen. Außerdem lassen sie sich relativ einfach mit entsprechend geformten Seitenwandschalen für die Vulkanisationsform herstellen.

Es ist vorgesehen, dass die Noppen eine im Wesentlichen zylinderförmige Gestalt mit einem konstanten Durchmesser aufweisen.
Der Übergang der Noppe in die Seitenwand soll mit einer Rundung versehen werden, um Spannungsspitzen und damit Sollbruchstellen bei der Belastung zu reduzieren. Die zylinderförmige Gestalt der Noppen verbessert die Schnittresistenz gegenüber scharfkantigen Objekten.

In einer weiteren vorteilhaften Weiterbildung der Erfindung ist vorgesehen, dass der Durchmesser der zylinderförmigen Noppen zwischen 3 und 20 mm beträgt.
In diesem Durchmesserbereich wird eine hohe Schnittresistenz gewährleistet.

In einer weiteren vorteilhaften Weiterbildung der Erfindung ist vorgesehen, dass die Höhenabmessungen der zylinderförmigen Noppen im mittleren Bereich der strukturierten Oberfläche zwischen 30 und 80 % der Seitenwanddicke beträgt. Dadurch besitzt die strukturierte Oberfläche, mit den hohen elastischen Eigenschaften, eine optimale Dickenabmessung.

Anhand eines Ausführungsbeispiels soll die Erfindung erläutert werden. Es zeigen:
- Fig. 1:: den Fahrzeugreifen mit Seitenwand in einer dreidimensionalen Darstellung
- Fig. 2:: einen vergrößerten Ausschnitt der Seitenwand
- Fig. 3:: die strukturierte Oberfläche der Seitenwand in einer Querschnitts-Ansicht
- Fig. 4:: Querschnittansicht des Fahrzeugreifens

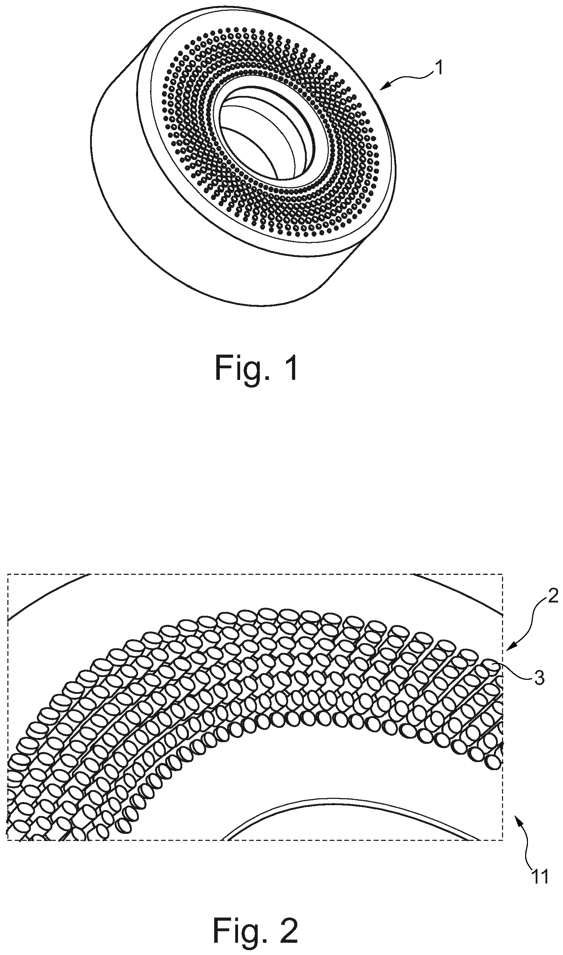

Die Figur 1 zeigt den Fahrzeugreifen 1 mit der strukturierten Oberfläche in einer dreidimensionalen Ansicht. Die strukturierte Oberfläche erstreckt sich über einen Teilbereich der Seitenwand, der zwischen dem Reifenwulst und dem Laufstreifen angeordnet ist.

Die Figur 2 zeigt einen vergrößerten Ausschnitt der Seitenwand 11 mit der strukturierten Oberfläche 2. Die strukturierte Oberfläche 2 weist eine Vielzahl von Seitenwandelementen 3 in Form von Noppen mit einer zylinderförmigen Gestalt auf. Zwischen den Seitenwandelementen sind jeweils Aussparungen angeordnet, die die einzelnen Seitenwandelemente voneinander trennen.

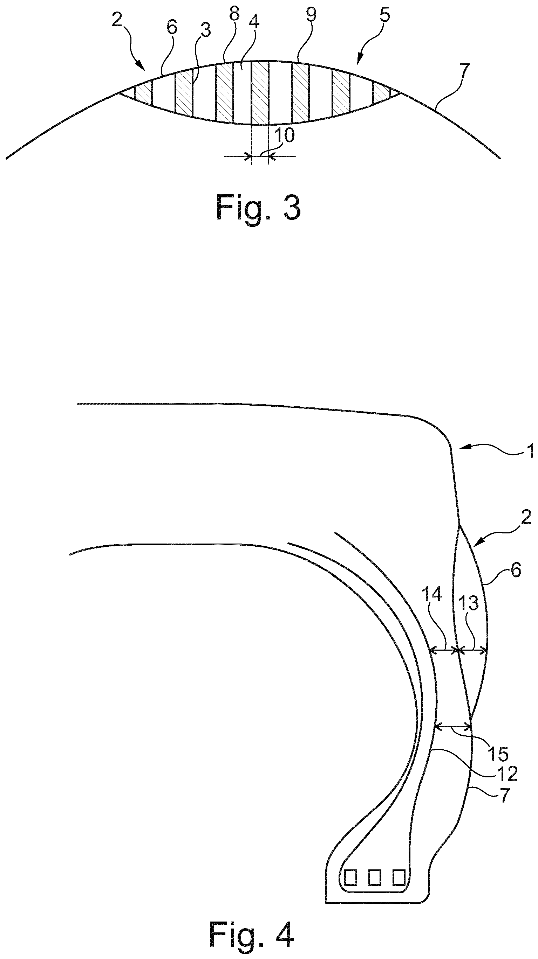

Die Figur 3 zeigt die strukturierte Oberfläche 2 der Seitenwand in einer QuerschnittsAnsicht. Die Seitenwandelemente 3 sind beispielsweise in Form von Noppen mit zylinderförmiger Gestalt ausgebildet. Zwischen den Seitenwandelementen 3 sind eine Vielzahl von Aussparungen 4 angeordnet. Die strukturierte Oberfläche 2 besitzt im Querschnitt eine linsenförmige Gestalt 5. Die äußere Konturlinie 6 der strukturierten Oberfläche 2 besitzt einen stetigen Kurvenverlauf, der sich direkt an die Seitenkontur 7 der Seitenwand ohne Aussparungen anschließt. Der Positivanteil , der das Verhältnis von Gummimaterial zu Aussparungen wiedergibt, der strukturierten Oberfläche beträgt zwischen 20 und 70 %. Die Noppen 8 im mittleren Bereich der strukturierten Oberfläche 2 besitzen eine Höhenabmessung zwischen 30 und 80 % der Seitenwanddicke. Zu beiden Rändern hin nimmt die Höhenabmessung der Noppen ab. Bei einem anderen Ausführungsbeispiel sind die Seitenwandelemente 9 in Form von in Umfangsrichtung des Fahrzeugreifens umlaufenden Rippen ausgebildet, die eine rechteckförmige Querschnitts-Kontur aufweisen. Bei einem weiteren nicht dargestellten Ausführungsbeispiel besitzen die Seitenwandelemente 9 eine wellenförmige Querschnitts-Kontur. Der Durchmesser der zylinderförmigen Noppen beträgt vorzugsweise zwischen 3 und 20 mm.

Die Figur 4 zeigt den Fahrzeugreifen 1 in einer Querschnittansicht. Die strukturierte Oberfläche hat im mittleren Bereich eine Dicke bzw. Höhenabmessung 13, die ca. 30 bis 80 % der Seitenwanddicke 15 beträgt. Die Noppen und die Aussparungen sind in der Figur 4 nicht dargestellt. Die Seitenwanddicke 15 kann in Abhängigkeit der Reifengröße zwischen 5 und 200 mm betragen. Die Seitenwanddicke 15 ist die Materialdicke, die sich auf die Außenseite 12 der Reifenkarkasse bezieht.

### Bezugszeichenliste

- 1: Fahrzeugreifen
- 2: strukturierte Oberfläche der Seitenwand
- 3: Seitenwandelemente in Form von Noppen mit zylinderförmiger Gestalt
- 4: Aussparungen zwischen den Seitenwandelementen
- 5: im Querschnitt linsenförmige Gestalt der strukturierten Oberfläche
- 6: äußere Konturlinie der strukturierten Oberfläche mit stetigen Kurvenverlauf
- 7: Seitenwand-Kontur ohne Aussparungen
- 8: Noppen im mittleren Bereich der strukturierten Oberfläche
- 9: Seitenwandelement der strukturierten Oberfläche mit rechteckförmiger Kontur in Form einer umlaufenden Rippe
- 10: Durchmesser der zylinderförmige Noppe
- 11: Seitenwand
- 12: Außenseite der Reifenkarkasse
- 13: Höhenabmessung im mittleren Bereich der strukturierten Oberfläche
- 14: Seitenwanddicke ohne Dicke der strukturierten Oberfläche
- 15: Seitenwanddicke (ca. 5 bis 200 mm)

## Patentansprüche

1. Fahrzeugreifen für den Einsatz auf Baustellen oder für den Bergbau mit einem Laufstreifen, einer Reifenkarkasse, Reifenwülsten, Reifenschultern und Seitenwänden (11),
wobei die Seitenwände (11) sich von den Reifenwülsten bis in die Reifenschultern hin erstrecken,
wobei die Seitenwände (11) unterschiedliche Teilbereiche aufweisen und eine schützende Materialschicht für die Reifenkarkasse bilden,
wobei ein Teilbereich der Seitenwand (11) eine ausgeprägte strukturierte Oberfläche (2) mit regelmäßig angeordneten Seitenwand-Elementen (3) und einen Positivanteil an Gummimaterial von 20 % bis 70 % aufweist, wobei der Teilbereich der Seitenwand (11) mit der strukturierten Oberfläche (2) zwischen den regelmäßig angeordneten Seitenwand-Elementen (3) liegende ausgeprägte Aussparungen (4) aufweist und im Querschnitt linsenförmig ausgebildet ist,
wobei die äußere Konturlinie (6) der strukturierten Oberfläche (2) einen stetigen Kurvenverlauf aufweist und die Seitenwand-Kontur (7) ohne Aussparungen nachbildet
und wobei die Seitenwand-Elemente (3) in Verbindung mit den dazwischen liegenden Aussparungen (4) die elastischen Eigenschaften der Außenseite der Seitenwand (11) erhöhen, wodurch die Schnittresistenz der Seitenwand (11) gegenüber scharfkantigen Objekten wesentlich erhöht wird, **dadurch gekennzeichnet, dass** die Seitenwandelemente (3) der strukturierten Oberfläche in Form von herausragenden Noppen ausgebildet sind,
wobei die Noppen eine im Wesentlichen zylinderförmige Gestalt mit einem konstanten Durchmesser (10) aufweisen.

2. Fahrzeugreifen nach einem der vorhergehenden Ansprüche
**dadurch gekennzeichnet, dass**
der Durchmesser (10) der zylinderförmigen Noppen zwischen 3 und 20 mm beträgt.

## Claims

1. Vehicle tire for use on construction sites or for the mining sector, having a tread, a tire carcass, tire beads, tire shoulders and side walls (11),
wherein the side walls (11) extend from the tire beads into the tire shoulders,
wherein the side walls (11) have different sub-regions and form a protective material layer for the tire carcass,
wherein a sub-region of the side wall (11) has a distinct structured surface (2) with regularly arranged side wall elements (3) and a positive component of rubber material of 20% to 70%,
wherein the sub-region of the side wall (11) with the structured surface (2) has distinct recesses (4) situated between the regularly arranged side wall elements (3) and is cross-sectionally of lens-shaped form,
wherein the outer contour line (6) of the structured surface (2) has a continuous curve profile, and replicates the side wall contour (7) without recesses, and wherein the side wall elements (3) in conjunction with the recesses (4) situated in between increase the elastic characteristics of the outer side of the side wall (11), whereby the cutting resistance of the side wall (11) with respect to sharp-edged objects is significantly increased,
**characterized in that**
the side wall elements (3) of the structured surface are in the form of protruding studs,
wherein
the studs have a substantially cylindrical design with a constant diameter (10).

2. Vehicle tire according to one of the preceding claims,
**characterized in that**
the diameter (10) of the cylindrical studs amounts to between 3 and 20 mm.

## Revendications

1. Bandage pneumatique destiné à être utilisé sur des chantiers ou dans des mines, le bandage présentant une bande de roulement, une carcasse de bandage, des bourrelets de bandage, des épaulements de bandage et des parois latérales (11),
les parois latérales (11) s'étendant depuis les bourrelets de bandage jusque dans les épaulements de bandage,
les parois latérales (11) présentant différentes parties et formant une couche de matière de protection de la carcasse du bandage,
une partie de la paroi latérale (11) présentant une surface (2) à structure gaufrée présentant des éléments (3) de paroi latérale disposés régulièrement et une partie positive en matériau de caoutchouc de 20 % à 70 %,
la partie de la paroi latérale (11) présentant la surface structurée (2) présentant des découpes gaufrées (4) disposées régulièrement entre les éléments (3) de paroi latérale et ayant en coupe transversale la forme d'une lentille,
la ligne de contour extérieur (6) de la surface structurée (2) présentant une courbe constante et formant le contour (7) de paroi latérale sans découpe,
les éléments (3) de paroi latérale augmentant en association avec les découpes (4) situées entre eux les propriétés élastiques du côté extérieur de la paroi latérale (11), ce qui augmente considérablement la résistance à la déchirure de la paroi latérale (11) par des objets à bords tranchants,
**caractérisé en ce que**
les éléments (3) de paroi latérale de la surface structurée sont configurés sous la forme de boutons en saillie et
**en ce que** les boutons ont une forme essentiellement cylindrique d'un diamètre (10) constant.

2. Bandage pour roues de véhicules selon l'une quelconque des revendications précédentes, **caractérisés en ce que** le diamètre (10) des boutons cylindriques est compris entre 3 et 20 mm.
